# EUROPEAN PATENT SPECIFICATION

(11) **EP 1 634 931 B1**
(45) Date of publication and mention of the grant of the patent: **11.04.2007**
(21) Application number: 05019766.4
(22) Date of filing: 12.09.2005
(51) Int. Cl.: C09D 11/00

(54) **Liquid ink composition and ink jet recording method**
Flüssige Tintenzusammensetzung und Tintenstrahldruckverfahren
Composition d'encre liquide et procédé d'impression à jet d'encre

(30) Priority: 13.09.2004 JP 2004265415
(43) Date of publication of application: 15.03.2006
(73) Proprietor: FUJIFILM Corporation, Minato-ku Tokyo (JP)
(72) Inventor: Aoshima, Keitaro, Yoshida-cho Haibara-gun Shizuoka (JP)
(74) Representative: HOFFMANN EITLE

(56) References cited:
- EP-A- 1 205 815
- EP-A- 1 285 952
- US-A- 5 453 121

## Description

### Field of the Invention

The present invention relates to a liquid ink composition and an ink jet recording method, more specifically a liquid ink composition containing charged particles increased in the quantity of electric charge, and an ink jet recording method.

### Background of the Invention

As image recording methods of forming an image on a recording medium, e.g., paper, on the basis of image data signals, an electrophotographic system, a sublimation type and a melting type heat transfer system, and an ink jet recording system are used. The electrophotographic system requires a process of forming an electrostatic latent image on a photosensitive drum by electric charge and exposure, so that the system is complicated and the apparatus is expensive. The price of the apparatus is inexpensive as for the heat transfer system, but the system uses ink ribbons, so that it is high in running cost and leaves wastes. On the other hand, in the ink jet recording system, since the apparatus is inexpensive and an image is directly formed on a medium to be recorded by ejecting inks on only a required image area, so that ink can be efficiently used and running cost is low. Further, the ink jet recording system is low in noise and excellent as the image recording system.

Ink jet recording systems include, for example, a system of ejecting ink droplets by the pressure of vapor generated by the heat of an exothermic element, a system of ejecting ink droplets by the mechanical pressure pulse generated by piezoelectric elements, and a system of ejecting ink droplets containing charged particles by utilizing electrostatic field (refer to Japanese Patent 3315334 and U.S. Patent 6,158,844). Methods of ejecting ink droplets by vapor or mechanical pressure cannot control the flying direction of ink droplets and it is difficult to correctly land ink droplets on a desired point of a medium to be recorded on due to distortion of ink nozzles and convection of air.

On the other hand, since a method of using electrostatic field controls the flying direction of ink droplets by electrostatic field, it is possible to correctly land ink droplets on a desired point. Accordingly, this system is useful for being capable of forming high quality image-formed matters (printed matters).

As the ink composition to be used in ink jet recording using electrostatic field, an ink composition comprising a dispersion medium and charged particles containing at least a coloring material (refer to JP-A-8-291267 and U.S. Patent 5,952,048) is used. An ink composition containing a coloring material can form inks of four colors of yellow, magenta, cyan and Chinese ink (black) by changing coloring materials, and further special color inks of gold and silver can be formed. Accordingly, this system is useful as color image-formed matters (printed matters) can be produced.

On the other hand, it has been desired to lower the drive pulse voltage to ejection electrode of ink jet recording apparatus for the reductions of apparatus costs and consumed electric power. However, when drive pulse voltage is lowered, the pulse responsibility of the charged particles in an ink composition lowers, so that it is necessary to increase the quantity of electric charge of the charged particles in an ink composition to improve the responsibility. The increase in quantity of electric charge of an ink composition as a whole can be achieved by increasing the content of an electric charge adjustor, but in this case the quantity of electric charge of the charged particles does not increase and only the quantity of charge of the dispersion medium is liable to increase, so that there is the possibility that the density of the image obtained by ink ejection lowers. Accordingly, a technique of particularly capable of increasing the quantity of charge of charged particles is desired.

### Summary of the Invention

An object of an illustrative, non-limiting embodiment of the invention is to provide a liquid ink composition containing charged particles increased in the quantity of electric charge, and another object is to provide an ink jet recording method.

As a result of eager examination to achieve the above objects, the present inventor found that the quantity of electric charge of charged particles is conspicuously increased by the addition of specific components (a) and (b) shown below to a liquid ink composition, which led to the invention.

That is, exemplary embodiment of the invention is as follows.
(1) A liquid ink composition containing charged particles including at least a coloring material, wherein the liquid ink composition contains:
   (a) at least a compound selected from an organic acid and a metal salt thereof; and
   (b) at least a compound selected from a basic compound and an onium salt.
(2) An ink jet recording method including ejecting an ink droplet containing a liquid ink composition as described in the above item (1).

According to the invention, by the addition of (a) at least a compound selected from an organic acid and a metal salt of an organic acid, and (b) at least a compound selected from a basic compound and an onium salt, to a liquid ink composition, these compounds function as the electric charge adjustors, thus the liquid ink composition containing charged particles conspicuously increased in the quantity of electric charge, and the ink jet recording method can be provided.

### Brief Description of the Drawings

Fig. 1 is a general view typically showing an illustrative, non-limitng example of ink jet recording apparatus for use in the invention.
Fig. 2 is an oblique view showing an illustrative, non-limiting example of the constitution of the ink jet head of ink jet recording apparatus for use in the invention (for simplification, the edge of the guard electrode at each ejecting part is not shown).
Fig. 3 is the cross section of side view of Fig. 2 showing the state of the distribution of charged particles in a case where a plurality of ejecting parts of the ink jet head are used (corresponding to the view X-X in Fig. 2).

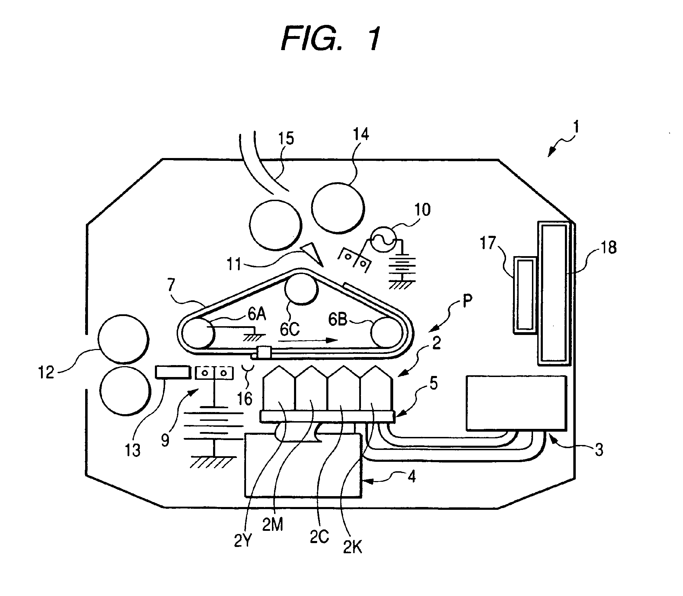

Reference numerals and signs in Figs. 1 to 3 are described below.
G: Jetted ink droplets
P: Recording medium
Q: Ink flow
R: Charged particles
1: Ink jet recording apparatus
2: Ejection head
3: Ink circulatory system
4: Head driver
5: Position controlling means
6A, 6B, 6C: Carrier belt stretching rollers
7: Carrier belt
8: Carrier belt position detecting means
9: Electrostatic suction means
10: Destaticizing means
11: Mechanical means
12: Feed roller
13: Guide
14: Image fixing means
15: Guide
16: Recording medium position detecting means 17: Exhaust fan
18: Solvent vapor adsorbing material
38: Ink guide
40: Supporting bar
42: Ink meniscus
44: Insulating layer
46: First ejecting electrode
48: Insulating layer
50: Guard electrode
52: Insulating layer
56: Second ejecting electrode
62: Floating conductive plate
64: Covering film
66: Insulating member
70: Ink jet head
72: Ink channel
74: Substrate
75, 75A, 75B: Openings
76, 76A, 76B: Ejecting parts
78: Ink guide part

### Detailed Description of the Invention

An exemplary embodiment of the invention is described in detail below. In the first place, component (a) is described.

### Organic acid:

The organic acids for use in the invention are not particularly restricted, but they are preferably organic compounds having carboxylic acid, sulfonic acid, sulfuric acid, phosphoric acid, phosphonic acid or boric acid as an acid radical. More preferably, they are organic compounds having carboxylic acid as an acid radical. The molecular weight of organic acids is, for example, from 50 to 500,000, preferably from 70 to 300,000. Further, compounds having 2 or more carbon atoms per 1 acid radical are more preferred as organic acids. Organic acids having a boiling point of 150°C or more are more preferred for the reason that they are odorless. In addition to the above compounds, copolymers containing carboxylic acid, e.g., methacrylic acid, acrylic acid, vinylbenzoic acid or maleic acid, and monomers having a radical polymerizable double bond as copolymer components are also preferred as organic acids.

As the specific examples of preferred organic acids, hexanoic acid, octanoic acid, 2-ethylhexanoic acid, lauric acid, palmitic acid, stearic acid, oleic acid, elaidic acid, linolenic acid, nonenylsuccinic acid, norbornenecarboxylic acid, norbornaneacetic acid, abietic acid, naphthenic acid, adamantaneacetic acid, adipic acid, sebacic acid, dodecanoic diacid, dodecanoic diacid monoamide, dodecenylsuccinic acid, dodecenylsuccinic acid monoamide, benzoic acid, toluic acid, phthalic acid, salicylic acid, naphthoic acid, furan- carboxylic acid, benzilic acid, anisic acid, dodecylbenzenesulfonic acid, dioctylsulfosuccinic acid, monododecyl- sulfuric acid, phenylphosphoric acid, phenylphosphonic acid, hexylboronic acid, copolymers of (meth)acrylic acid and (meth)acrylate (e.g., copolymers of methacrylic acid and dodecyl acrylate, copolymers of acrylic acid and stearyl methacrylate), copolymers of vinylbenzoate and styrene, copolymers of maleic acid and vinyltoluene, copolymers of maleic acid monoamide and styrene, etc., are exemplified. These organic acids can also be used in combination.

The content of organic acids is, for example, in the range of from 0.0001 to 10 mass% to the ink composition, preferably from 0.0005 to 5 mass%.

### Metal salt of organic acid:

As the metal salts of organic acids for use in the invention, e.g., salts of metals belonging to the Ia group (e.g., Li, Na, K, etc.), salts of metals belonging to the Ib group (e.g., Cu, Ag, etc.), salts of metals belonging to the IIa group (e.g., Mg, Ca, Ba, etc.), salts of metals belonging to the IIb group (e.g., Zn, Cd, etc.), salts of metals belonging to the IIIa group (e.g., Sc, etc.), salts of metals belonging to the IIIb group (e.g., Al, Ga, In, etc.), salts of metals belonging to the IVa group (e.g., Ti, Zr, etc.), salts of metals belonging to the IVb group (e.g., Si, Ge, Sn, Pb, etc.), salts of metals belonging to the Va group (e.g., Nb, etc.), salts of metals belonging to the Vb group (e.g., As, Bi, etc.), salts of metals belonging to the VIa group (e.g., Cr, Mo, etc.), salts of metals belonging to the VIb group (e.g., Se, Te, etc.), salts of metals belonging to the VIIa group (e.g., Mn, etc.), and salts of metals belonging to the VIII group (e.g., Fe, Co, Ni, Ir, etc.) of the above organic acids, and the salts of metal oxides of the above organic acids are preferably exemplified.

As the specific examples of the metal salts of organic acids preferably used in the invention, salts of divalent or higher valence metal and salts of divalent or higher valence metal oxide, e.g., zirconium 2-ethylhexanoate, zirconium oxide 2-ethylhexanoate, zirconium oxide naphthenate, and magnesium 2-ethylhexanoate are exemplified. These compounds can also be used in combination.

The content of organic acid metal salts is, for example, in the range of from 0.0001 to 10 mass% (weight%) to the ink composition, preferably from 0.0005 to 5 mass%.

Component (b) is described in the next place.

### Basic compound:

The basic compounds for use in the invention are not particularly restricted, but organic amines are preferably used. In particular amines containing a polar group other than acid radicals in the molecule, e.g., a hydroxyl group, a cyano group, an ether group or an amido group, are preferred. Amines containing 2 or more amino groups in the molecule are more preferred. Amines having a boiling point of 150°C or more are further preferred for the reason that they are odorless.

The specific examples of basic compounds preferably used in the invention include decylamine, dodecylamine, N,N-dimethyldodecylamine, stearylamine, acetylamine, benzyl- piperidine, N,N-dimethylcyclohexylamine, mono-, di- or triethanolamine, aminopropanol, aminobutanol, aminohexanol, dimethylaminohexanol, morpholine, aminoethylmorpholine, aminopropylmorpholine, aminoethylpiperazine, aminoethyl- pyrrolidine, bis(hydroxyethyl)piperazine, aminopropyl-pyrrolidinone, aminoethoxyethanol, dimethylaminoethyl-morpholine, phenylmorpholine, 1,3-bis[1-(2-hydroxyethyl)-4-piperidyl]propane, gramine, 1-(2-phenethyl)-4-piperidone, ethylenediamine, trimethylenediamine, tetrainethylene, hexamethylenediamine, aniline, N,N-diethylaniline, dodecyl- aniline, aminobiphenyl, aminophenol, 4-aminoacetanilide, aminoacetophenone, aminobenzamide, aminobenzanilide, aminobenzophenone, aminopyridine, dimethylaminomethyl- thiophene, dimethylaminophenethyl alcohol, polyethyleneimine, polyarylamine, polyvinylpyridine, copolymers of N,N-dimethylaminoethyl methacrylate and methacrylates (e.g., butyl methacrylate), copolymers of N,N-diethylaminoethyl methacrylate and acrylates (e.g., ethyl acrylate), copolymers of dimethylaminomethylstyrene and styrene, and condensation polymers of 4-hydroxy-2,2,6,6-tetramethyl-1-piperidine ethanol and 1,4-butane diacid. These compounds can also be used in combination.

The content of basic compounds is, for example, in the range of from 0.0001 to 10 mass% to the ink composition, preferably from 0.0005 to 5 mass%.

### Onium salt:

As the onium salts for use in the invention, ammonium salts, sulfonium salts and phosphonium salts are exemplified, and ammonium salts are preferred above all.

The specific examples of the onium salts preferably used in the invention include tetramethylammonium bromide, tetraethylammonium bromide, tetrabutylammonium chloride, tetrabutylammonium bromide, tetrabutylammonium iodide, tetrabutylammonium toluenesulfonate, tetrabutylammonium trifluoromethanesulfbnate, tetrabutylammonium tetrafluoro-borate, decyltrimethylammonium chloride, dodecyltrimethyl-ammonium bromide, hexadecyltrimethylammonium bromide, cetyl-trimethylammonium chloride, benzyltrimethylammonium bromide, triphenylsulfonium toluenesulfonate, tri(methylphenyl)-sulfonium toluenesulfonate, tri(chlorophenyl)sulfonium toluenesulfonate, tetraphenylphosphonium bromide, copolymers of toluenesulfonate of N,N,N-trimethylammonioethyl methacrylate and methacrylates (e.g., butyl methacrylate), and copolymers of trimethylammoniomethylstyrene and styrene. These compounds can also be used in combination.

The content of onium salts is, for example, in the range of from 0.0001 to 10 mass% to the ink composition, preferably from 0.0005 to 5 mass%.

The ratio of the amounts of component (a) and component (b) is in the range of from 1/100 to 100/1 by mass ratio, preferably from 1/50 to 50/1. Further, component (a) and component (b) are added separately from the later-described covering agents.

The present invention relates to an ink composition comprising charged particles containing at least a coloring material, but it is preferred to use an ink composition comprising charged particles containing a dispersion medium and at least a coloring material for the reason that ink ejection is bettered in recording.

There are volume average and number average in the average particle size of charged particles according measuring methods. In the invention, the average particle size of charged particles is preferably from 0.2 to 5.0 µm as a volume average particle size. The particle size distribution is preferably narrow and uniform. An average particle size can be measured, e.g., by a centrifugal precipitation method with an apparatus, e.g., an ultracentrifugal automatic particle size distribution-measuring apparatus CAPA-700 (manufactured by HORIBA LTD.).

In the invention, the electric conductivity of an ink composition is preferably in the range of from 10 to 300 nS/m. Ejection of ink droplets is easy when the electric conductivity is in the range. The electric conductivity of an ink composition is more preferably from 30 to 200 nS/m.

The electric conductivity of charged particles can be found by centrifugally precipitating an ink composition, measuring the electric conductivity of the supernatant after the charged particles are precipitated, and subtracting the measured value of the supernatant from the electric conductivity of the ink composition. It is preferred in the invention that the electric conductivity of charged particles is 30% or more of the electric conductivity of the ink composition. In an ink jet recording system utilizing electrostatic field, charged particles are concentrated when ink droplets are ejected, but when the electric conductivity of charged particles is 50% or more, the concentration is efficiently generated. The electric conductivity of charged particles is more preferably 60% or more.

### Dispersion medium:

A dispersion medium is a dielectric liquid having high electrical resistivity, specifically preferably 10¹⁰ Ω cm or higher. The dielectric constant of a dielectric liquid is preferably 5 or less, more preferably 4 or less, and still more preferably 3.5 or less. When the dielectric constant of a dielectric liquid is in the above range, electric field effectively acts upon the charged particles in the dielectric liquid and preferred.

As the dispersion medium for use in the invention, straight chain or branched aliphatic hydrocarbon, alicyclic hydrocarbon, aromatic hydrocarbon, halogen substitution products of these hydrocarbons, and silicone oil are exemplified. For example, hexane, heptane, octane, isooctane, decane, isodecane, decalin, nonane, dodecane, isododecane, cyclohexane, cyclooctane, cyclodecane, toluene, xylene, mesitylene, Isopar-C, Isopar-E, Isopar-G, Isopar-H, Isopar-L, Isopar-M and Isopar-P (Isopar is the trade name of Exxon), Shellsol 70 and Shellsol 71 (Shellsol is the trade name of Shell Oil Co.), Amsco OMS and Amsco 460 solvents (Amsco is the trade name of Spirits Co.), and KF-96L (trade name, manufactured by Shin-Etsu Chemical Co., Ltd., Silicone Division) can be used alone or as a mixture. The content of a dispersion medium in the total ink composition is preferably from 20 to 99 mass%. When the content of a dispersion medium is 20 mass% or more, particles containing a coloring material can be well dispersed in the dispersion medium, and 99 mass% or less can suffice the content of a coloring material.

### Coloring material:

Well-known dyes and pigments can be used as the coloring materials in the invention, and they can be selected according to the use and the purpose. For example, from the viewpoint of the tone of image-recorded matters (printed matters), it is preferred to use pigments (for example, see Ganryo Bunsan Anteika to Hyomen Shori Gijutsu·Hyoka (Dispersion and Stabilization of Pigment and Techniques of Surface Treatment and Evaluation), First Edition, published by Gijutsu Joho Kyokai (Dec. 25, 2001) (hereinafter also referred to as non-patent literature 1). By changing coloring materials, inks of four colors of yellow, magenta, cyan and Chinese ink (black) can be formed. In particular, by using the pigments for use as offset printing inks and proofs, the same tone as the offset prints can be obtained, and so preferred.

As pigments for yellow inks, monoazo pigments, e.g., C.I. Pigment Yellow 1 and C.I. Pigment Yellow 74, disazo pigments, e.g., C.I. Pigment Yellow 12 and C.I. Pigment Yellow 17, non-benzidine series azo pigments, e.g., C.I. Pigment Yellow 180, azo lake pigments, e.g., C.I. Pigment Yellow 100, condensed azo pigments, e.g., C.I. Pigment Yellow 95, acid dye lake pigments, e.g., C.I. Pigment Yellow 115, basic dye lake pigments, e.g., C.I. Pigment Yellow 18, anthraquinone pigments, e.g., Flavanthrone Yellow, isoindolinone pigments, e.g., Isoindolinone Yellow 3RLT, quinophthalone pigments, e.g., Quinophthalone Yellow, isoindoline pigments, e.g., Isoindoline Yellow, nitroso pigments, e.g., C.I. Pigment Yellow 153, metal complex salt azomethine pigments, e.g., C.I. Pigment Yellow 117, and isoindolinone pigments, e.g., C.I. Pigment Yellow 139 are exemplified.

As pigments for magenta inks, monoazo pigments, e.g., C.I. Pigment Red 3, disazo pigments, e.g., C.I. Pigment Red 38, azo lake pigments, e.g., C.I. Pigment Red 53:1 and C.I. Pigment Red 57:1, condensed azo pigments, e.g., C.I. Pigment Red 144, acid dye lake pigments, e.g., C.I. Pigment Red 174, basic dye lake pigments, e.g., C.I. Pigment Red 81, anthraquinone pigments, e.g., C.I. Pigment Red 177, thioindigo pigments, e.g., C.I. Pigment Red 88, perinone pigments, e.g., C.I. Pigment Red 194, perylene pigments, e.g., C.I. Pigment Red 149, quinacridone pigments, e.g., C.I. Pigment Red 122, isoindolinone pigments, e.g., C.I. Pigment Red 180, and Alizarine lake pigments, e.g., C.I. Pigment Red 83 are exemplified.

As pigments for cyan inks, disazo pigments, e.g., C.I. Pigment Blue 25, phthalocyanine pigments, e.g., C.I. Pigment Blue 15, acid dye lake pigments, e.g., C.I. Pigment Blue 24, basic dye lake pigments, e.g., C.I. Pigment Blue 1, anthraquinone pigments, e.g., C.I. Pigment Blue 60, and alkali blue pigments, e.g., C.I. Pigment Blue 18 are exemplified.

As pigments for Chinese inks, organic pigments, e.g., aniline black pigments, and iron oxide pigments, and carbon black pigments, e.g., furnace black, lamp black, acetylene black and channel black are exemplified.

Further, processed pigments typified by Microlith Pigments, e.g., Microlith-A, -K and -T can also be preferably used. The specific examples thereof include Microlith Yellow 4G-A, Microlith Red BP-K, Microlith Blue 4G-T, and Microlith Black C-T.

Various kinds of pigments can be used according to necessity, e.g., calcium carbonate and titanium oxide pigments as pigments for white inks, aluminum powders as pigments for silver inks, and copper alloys as pigments for golden inks.

It is preferred to use fundamentally one kind of pigment for one color from the point of the simplicity of manufacture of ink, but it is also preferred to use two or more pigments in combination in some cases for the purpose of adjusting the hue, such as the mixture of phthalocyanine with carbon black for black ink. Further, pigments may be subjected to surface treatment before use by well-known methods, e.g., rosin treatment (the above non-patent literature 1).

The pigment content in all the ink composition is preferably from 0.1 to 50 mass%. The content of 0.1 mass% or more is sufficient as the pigment content and sufficiently good coloring can be obtained in the printed matters, and when the content is 50 mass% or less, particles containing a coloring material can be well dispersed in a dispersion medium. The pigment content is more preferably from 1 to 30 mass%.

### Covering agent:

In the invention, it is preferred that coloring materials such as pigments are dispersed (to be made particles) in a dispersion medium in the state of being covered with a covering agent rather than to be directly dispersed (to be made particles). By covering with a covering agent, the electric charge of the coloring material is masked and desired charge characteristics can be obtained. In the invention, after ink jet recording on a recording medium ("a recording medium" means a medium on which an image is recorded, such as paper and the like), the medium is subjected to fixation with a heating means such as a heat roller, and the covering agent is melted by heat at this time and fixation is efficiently effected.

As the examples of covering agents, e.g., rosins, rosin-modified phenolic resin, alkyd resin, (meth)acrylic polymer, polyurethane, polyester, polyamide, polyethylene, polybutadiene, polystyrene, polyvinyl acetate, an acetal- modified product of polyvinyl alcohol, and polycarbonate are exemplified. Of these covering agents, from the easiness of formation of particles, polymers having a weight average molecular weight of from 2,000 to 1,000,000, and the degree of polydispersion (weight average molecular weight/number average molecular weight) of from 1.0 to 5.0 are preferred. Further, from the easiness of fixation, polymers having any one of a softening point, a glass transition point and a melting point of from 40 to 120°C are preferred.

The polymers particularly preferably used in the invention as the covering agent are polymers containing at least any one of the constitutional units represented by the following formulae (1) to (4).

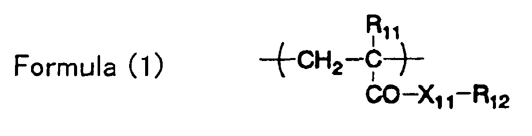

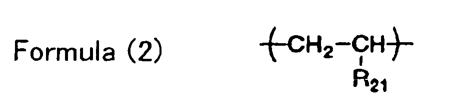

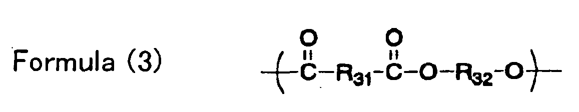

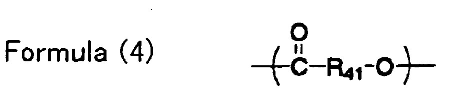

In the above formulae, X₁₁ represents an oxygen atom or -N(R₁₃)-; R₁₁ represents a hydrogen atom or a methyl group; R₁₂ represents a hydrocarbon group having from 1 to 30 carbon atoms; R₁₃ represents a hydrogen atom or a hydrocarbon group having from 1 to 30 carbon atoms; R₂₁ represents a hydrogen atom or a hydrocarbon group having from 1 to 20 carbon atoms; and R₃₁, R₃₂ and R₄₁ each represents a divalent hydrocarbon group having from 1 to 20 carbon atoms; and the hydrocarbon groups represented by R₁₂, R₂₁, R₃₁, R₃₂ and R₄₁ may have an ether bond, an amino group, a hydroxyl group or a halogen substituent.

A polymer containing a constitutional unit represented by formula (1) can be obtained by radical polymerization of a corresponding radical polymerizable monomer by known methods. As the radical polymerizable monomers to be used, (meth)acrylic esters, e.g., methyl (meth)acrylate, ethyl (meth)acrylate, propyl (meth)acrylate, butyl (meth)acrylate, hexyl (meth)- acrylate, octyl (meth)acrylate, 2-ethylhexyl (meth)acrylate, dodecyl (meth)acrylate, stearyl (meth)acrylate, cyclohexyl (meth)acrylate, phenyl (meth)acrylate, benzyl (meth)acrylate, and 2-hydroxyethyl (meth)acrylate; and (meth)acrylamides, e.g., N-methyl(meth)acrylamide, N-propyl(meth)acrylamide, N-phenyl(meth)acrylamide, and N,N-dimethyl(meth)acrylamide are exemplified.

A polymer containing a constitutional unit represented by formula (2) can be obtained by radical polymerization of a corresponding radical polymerizable monomer by known methods. As the radical polymerizable monomers to be used, e.g., ethylene, propylene, butadiene, styrene and 4-methylstyrene are exemplified.

A polymer containing a constitutional unit represented by formula (3) can be obtained by dehydration condensation of a corresponding dicarboxylic acid, or acid anhydride and diol by known methods. As the dicarboxylic acids to be used, succinic anhydride, adipic acid, sebacic acid, isophthalic acid, terephthalic acid, 1,4-phenylenediacetic acid and diglycolic acid are exemplified. As the diols to be used, ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol, and diethylene glycol are exemplified.

A polymer containing a constitutional unit represented by formula (4) can be obtained by dehydration condensation of a corresponding carboxylic acid having a hydroxyl group by known methods, or ring opening polymerization of a corresponding cyclic ester of a carboxylic acid having a hydroxyl group by known methods. As the carboxylic acids having a hydroxyl group or cyclic esters of a carboxylic acid having a hydroxyl group to be used, 6-hydroxyhexanoic acid, 11-hydroxyundecanoic acid, hydroxybenzoic acid, and ε-caprolactone are exemplified.

The polymers containing at least any one of the constitutional units represented by formulae (1) to (4) may be homopolymers of the constitutional units represented by formulae (1) to (4), or they may be copolymers with other constitutional units. These polymers may be used alone as the covering agents or two or more of these covering agents may be used in combination.

The covering agent content in the total ink composition is preferably in the range of from 0.1 to 40 mass%. The content of 0.1 mass% or more is sufficient as the covering agent content and sufficient fixation can be obtained, and when the content is 40 mass% or less, good particles containing a coloring material and a covering agent can be formed.

### Dispersant:

In the invention, a mixture of a coloring material and a covering agent is preferably dispersed (made particles) in a dispersion medium, and it is more preferred to use a dispersant to control particle sizes and inhibit particles from precipitating.

As the examples of preferred dispersants, surfactants typified by sorbitan fatty acid esters, e.g., sorbitan monooleate, and polyethylene glycol fatty acid esters, e.g., polyoxyethylene distearate are exemplified. In addition, e.g., copolymers of styrene and maleic acid, and amine-modified products of the copolymers, copolymers of styrene and (meth)acrylic compounds, (meth)acrylic polymers, copolymers of polyethylene and (meth)acrylic compounds, rosin, BYK-160, 162, 164, 182 (polyurethane polymers, manufactured by BYK Chemie), EFKA-401 and 402 (acrylic polymers, manufactured by EFKA Co.), and Solspers 17000 and 24000 (polyester polymers, manufactured by Zeneca Agrochemicals Co., Ltd.) are exemplified. From the viewpoint of the preservation stability of an ink composition for a long period of time, polymers having a weight average molecular weight of from 1,000 to 1,000,000, and the degree of polydispersion (weight average molecular weight/number average molecular weight) of from 1.0 to 7.0 are preferred. To use graft polymers or block polymers is most preferred.

The polymers particularly preferably used in the invention are graft polymers containing at least a polymer component comprising at least either one constitutional unit represented by the following formula (5) or (6), and a polymer component containing a constitutional unit represented by the following formula (7) at least as a graft chain. 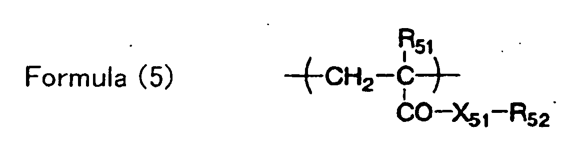 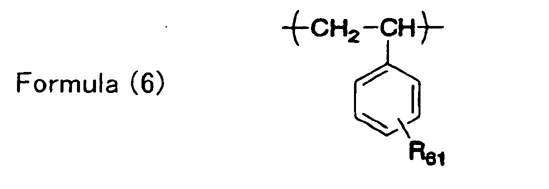 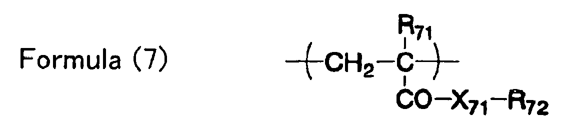 wherein X₅₁ represents an oxygen atom or -N(R₅₃)-; R₅₁ represents a hydrogen atom or a methyl group; R₅₂ represents a hydrocarbon group having from 1 to 10 carbon atoms; R₅₃ represents a hydrogen atom or a hydrocarbon group having from 1 to 10 carbon atoms; R₆₁ represents a hydrogen atom, a hydrocarbon group having from 1 to 20 carbon atoms, a halogen atom, a hydroxyl group, or an alkoxyl group having from 1 to 20 carbon atoms; X₇₁ represents an oxygen atom or ―N(R₇₃)-; R₇₁ represents a hydrogen atom or a methyl group; R₇₂ represents a hydrocarbon group having from 4 to 30 carbon atoms; and R₇₃ represents a hydrogen atom or a hydrocarbon group having from 1 to 30 carbon atoms; and the hydrocarbon groups represented by R₅₂, R₆₁ and R₇₂ may contain an ether bond, an amino group, a hydroxyl group or a halogen substituent.

The above graft polymer can be obtained by polymerizing a radical polymerizable monomer corresponding to the monomer represented by formula (7) preferably in the presence of a chain transfer agent, introducing a polymerizable functional group to the terminals of the obtained polymer, and further copolymerizing with a radical polymerizable monomer corresponding to the monomer represented by formula (5) or (6).

As the radical polymerizable monomers corresponding to formula (5), e.g., (meth)acrylic esters, e.g., methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth)acrylate, and 2-hydroxyethyl (meth)acrylate, and (meth)acrylamides, e.g., N-methyl(meth)acrylamide, N-propyl(meth)acrylamide, N-phenyl(meth)acrylamide, and N,N-dimethyl(meth)acrylamide are exemplified.

As the radical polymerizable monomers corresponding to formula (6), e.g., styrene, 4-methylstyrene, chlorostyrene and methoxystyrene are exemplified.

As the radical polymerizable monomers corresponding to formula (7), e.g., hexyl (meth)acrylate, octyl (meth)acrylate, 2-ethylhexyl (meth)acrylate, dodecyl (meth)acrylate and stearyl (meth)acrylate are exemplified.

As the specific examples of these graft polymers, the polymers represented by the following formulae are exemplified.

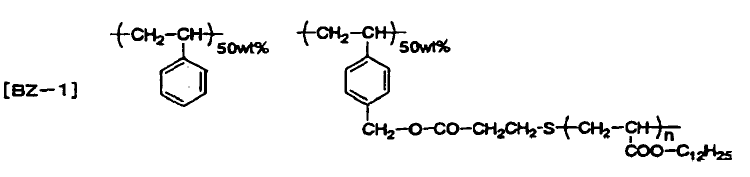

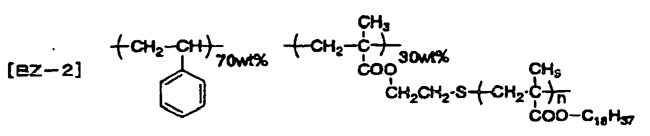

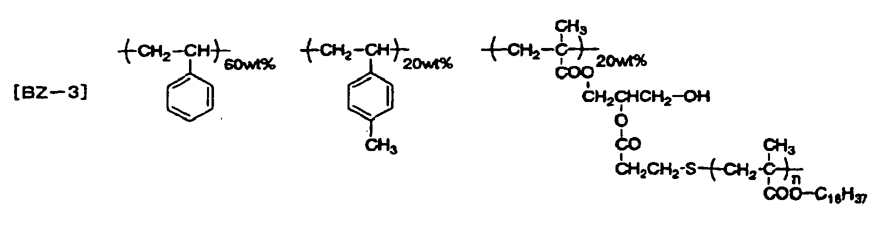

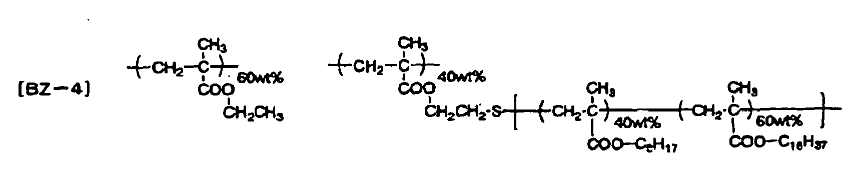

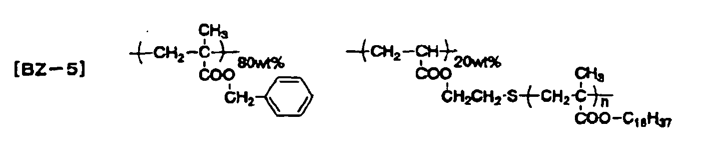

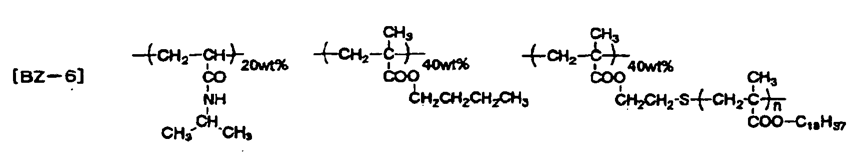

The graft polymers containing a polymer component comprising at least either one constitutional unit represented by formula (5) or (6), and a polymer component containing a constitutional unit represented by formula (7) at least as the graft chain may contain a constitutional unit represented by formula (5) and/or (6), and a constitutional unit represented by formula (7) alone, or may contain other constitutional unit. The preferred composition ratio of the polymer component having a graft chain to other polymer component is from 10/90 to 90/10. When the composition ratio is in this range, a good particle forming property can be obtained, so that a desired particle size is easily obtained and preferred. These polymers may be used alone as a dispersant, or two or more polymers may be used in combination.

The content of a dispersant in the total ink composition is preferably in the range of from 0.01 to 30 mass%. When the content of a dispersant is in this range, a good particle forming property can be obtained, so that a desired particle size can be obtained.

### Other components:

Further, antibacterial agents for preventing rottenness and surfactants for controlling the surface tension can be used in the invention, according to purpose.

### Manufacture of charged particles:

An ink composition containing charged particles can be manufactured with the above components, by dispersing (making particles) a coloring material, preferably with a covering agent. As the methods of dispersion (making particles), e.g., the following methods are exemplified.
(1) After mixing a coloring material and a covering agent in advance, the mixture is dispersed (made particles) with a dispersant and a dispersion medium, and then components (a) and (b) are added.
(2) A coloring material, a covering agent, a dispersant and a dispersion medium are dispersed (made particles) at the same time, and then components (a) and (b) are added.
(3) A coloring material, a covering agent, a dispersant, components (a) and (b) and a dispersion medium are dispersed (made particles) simultaneously.

Apparatus such as a kneader, a dissolver, a mixer, a high speed disperser, a sand mill, a roll mill, a ball mill, an attritor, and a beads mill (see non-patent literature 1) are used in mixing and dispersing.

### Ink jet recording apparatus:

It is preferred that the above ink composition is recorded on a recording medium by an ink jet recording system, and it is more preferred in the invention to use an ink jet recording system utilizing electrostatic field. An ink jet recording system utilizing electrostatic field is a system of applying voltage between a control electrode and a back electrode in rear of a recording medium to thereby concentrate the charged particles of an ink composition at the ejecting position by the electrostatic force, and ejecting the ink composition from the ejecting position to the recording medium. The voltage applied between a control electrode and a back electrode is such that, for example, the control electrode is a positive electrode and the back electrode is a negative electrode when the charged particles are positively charged. The same effect can be obtained by charging a recording medium in place of applying voltage to a back electrode.

As an ink ejecting system, for example, a system of ejecting ink from a needle-like tip such as an injector is known, and recording can be performed with the ink composition of the invention. However, the replenishment of charged particles after concentration and ejection of charged particles is difficult in this system, so that it is difficult to perform recording stably for a long period of time. When ink is circulated for forcedly replenishing charged particles, since the ink overflows the tip of an injection needle according to the method, the shape of meniscus at the tip of the injection needle of ejection position is not stable, so that stable recording is difficult, and so this system is suitable for short-term recording.

On the other hand, a method of capable of circulating an ink composition without overflowing the ink composition an ejection opening is preferably used. For example, according to a system wherein ink is circulated in an ink chamber having an ejection opening and concentrated ink droplets are ejected from the tip of an ink guide present in the ejection opening, whose tip faces on the side of a recording medium, by the application of voltage to a control electrode formed around the ejection opening, recording can be performed stably for a long period of time, since the replenishment of charged particles by the circulation of the ink and the meniscus stability at the ejecting position can be compatible. Further in the system, since the exposure of the ink to the air is limited only to the ejection opening, evaporation of the solvent is inhibited and physical characteristics of the ink are stabilized, so that the system can be very preferably used in the invention.

An example of the structure of an ink jet recording apparatus suitable to use the ink composition of the invention is described below. Fig. 1 is a general view typically showing an example of ink jet recording apparatus for use in the invention. The outline of the apparatus of performing four- color printing on one side of recording medium P is described.

Ink jet recording apparatus 1 shown in Fig. 1 is equipped with ink circulatory system 3 for feeding inks to ejection head 2 comprising ejection heads 2C, 2M, 2Y and 2K of four colors for performing full color image formation and for recovering the inks from ejection head 2, head driver 4 for driving ejection head 2 by the output of the outside apparatus such as a computer and RIP not shown, and position controlling means 5. Ink jet recording apparatus 1 is further equipped with carrier belt 7 stretching on three rollers 6A, 6B and 6C, carrier belt position detecting means 8 consisting of an optical sensor and the like capable of detecting the position of carrier belt 7 in the width direction, electrostatic suction means 9 for maintaining recording medium P on carrier belt 7, and destaticizing means 10 and mechanical means 11 for peeling away recording medium P from carrier belt 7 after conclusion of image formation. On the upstream and the downstream of carrier belt 7 are arranged feed roller 12 and guide 13 for feeding recording medium P from a stocker not shown to carrier belt 7, and image fixing means 14 and guide 15 for fixing the inks on recording medium P after being peeled and carrying the recording medium to a stocker of discharged paper not shown. In the inside of ink jet recording apparatus 1 are arranged detecting means 16 for detecting the position of recording medium P at the facing position to ejection head 2 with carrier belt 7 between, a solvent collecting part comprising exhaust fan 17 for collecting the vapor of the solvent occurring from the ink composition, and solvent vapor adsorbing material 18, and the vapors in the inside of the apparatus are exhausted through the collecting part.

As feed rollers 12, well-known rollers can be used, and feed rollers 12 are arranged so that the feeding ability of recording medium P is increased. It is preferred to remove dirt and paper powder adhered on recording medium P. Recording medium P fed by feed rollers 12 is carried to carrier belt 7 through guide 13. The back surface of carrier belt 7 (preferably a metal back surface) is provided via roller 6A. Recording medium P carried is electrostatically adsorbed on the carrier belt by electrostatic suction means 9.

In Fig. 1, electrostatic suction is performed by a Scorotron charger connected to negative high voltage power supply. Recording medium P is electrostatically sucked on carrier belt 7 without floatation by electrostatic suction means 9 and, at the same time, the surface of recording medium P is uniformly charged. The electrostatic suction means is also utilized as a charging means of recording medium P in Fig. 1, but a charging means may be provided separately. Charged recording medium P is carried to the ejection head part by means of carrier belt 7, and electrostatic ink jet image formation is performed by piling recording signal voltage with charged potential as bias.

Image-recorded recording medium P is destaticized by destaticizing means 10, peeled away from carrier belt 7 by mechanical means 11, and carried to the fixing part. Peeled recording medium P is carried to image fixing means 14 and fixed. The fixed recording medium P is discharged to a stocker of discharged paper not shown through guide 15. The ink jet recording apparatus is also equipped with a collecting means of the vapor of the solvent occurring from an ink composition. The collecting means comprises solvent vapor adsorbing material 18, the air containing the solvent vapor in the apparatus is introduced into the adsorbing material by exhaust fan 17, and the vapor is collected by adsorption and exhausted out of the apparatus. The ink jet recording apparatus is not limited to the above example, and the number, shape, relative arrangement and charge polarity of constitutional devices, e.g., rollers and a charger can be arbitrarily selected. Four-color imaging is described in the above system, but the system may be a more multicolored system in combination with light-colored inks and special color inks.

The ink jet recording apparatus used in the above ink jet printing method is equipped with ejection head 2 and ink circulatory system 3, and ink circulatory system 3 may further comprise an ink tank, an ink circulating unit, an ink concentration controlling unit and an ink temperature controlling unit, and the ink tank may be equipped with a stirrer.

As ejection head 2, a single channel head, a multi- channel head or a full line head can be used, and main scanning is performed by the rotation of carrier belt 7.

An ink jet head preferably used in the invention is an ink jet system to perform ejection by increasing the concentration of ink in the vicinity of the opening by the electrophoresis of charged particles in an ink channel, and ejection of ink droplets is performed by electrostatic suction force mainly originating in a recording medium or the facing electrode arranged in rear of a recording medium. Therefore, when the recording medium or the facing electrode does not face to the ejection head, or when voltage is not applied to the recording medium or the facing electrode although the recording medium or the facing electrode is positioned facing to the head, ink droplets are not ejected and the inside of the apparatus does not become dirty even if voltage is applied to the ejecting electrode or vibration is given by error.

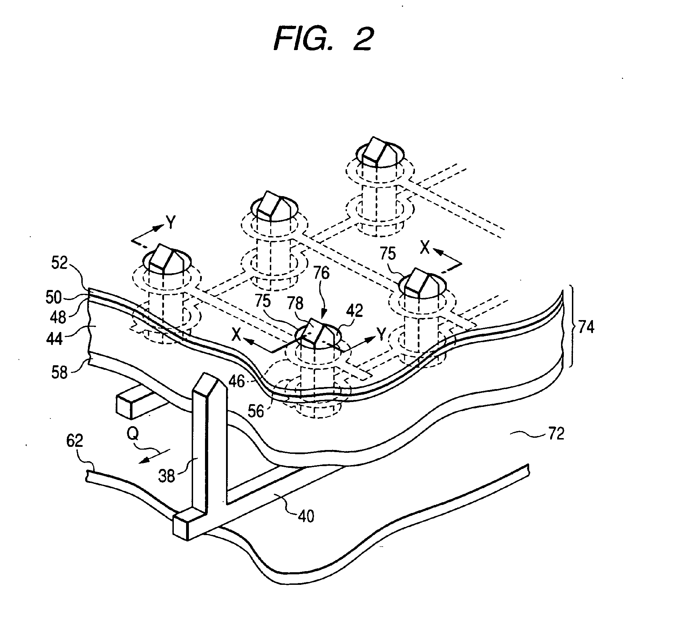

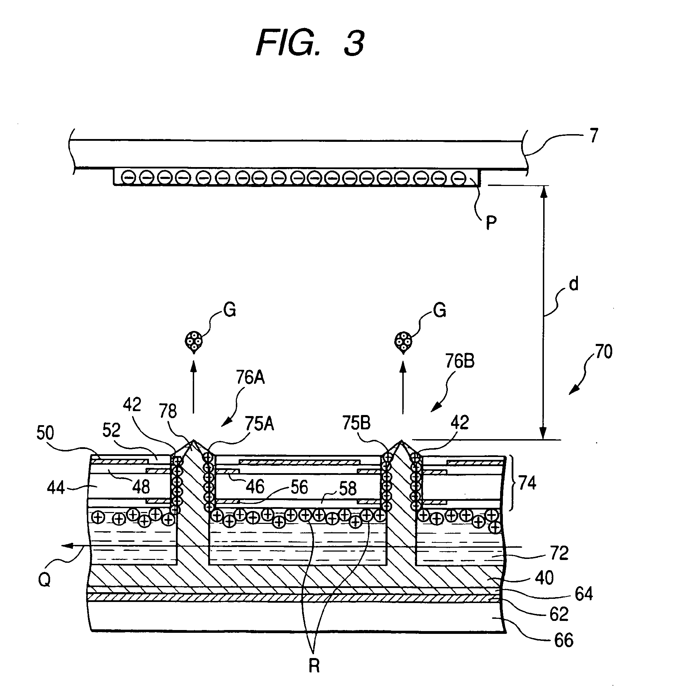

The ejection heads preferably used in the above ink jet recording apparatus are shown in Figs. 2 and 3. Fig. 2 is an oblique view showing the constitution of the ink jet head of ink jet recording apparatus for use in the invention (for simplification, the edge of the guard electrode at each ejecting part is not shown). Fig. 3 is the cross section of side view of Fig. 2 showing the state of the distribution of charged particles in a case where a plurality of ejecting parts of the ink jet head are used (corresponding to the view X-X in Fig. 2).

As shown in Figs. 2 and 3, ink jet head 70 comprises electrical insulating substrate 74 constituting the upper wall of ink channel 72 forming one way ink flow Q, and a plurality of ejecting parts 76 ejecting ink toward recording medium P. Ink guide part 78 to guide ink droplets G jetting from ink channel 72 to recording medium P is provided in each ejecting part 76, opening 75 through which ink guide part 78 is built is formed on substrate 74, and ink meniscus 42 is formed between ink guide part 78 and the inner wall of opening 75. The gap d between ink guide part 78 and recording medium P is preferably from 200 to 1,000 µm or so. Ink guide part 78 is fixed on supporting bar 40 at the lower side.

Substrate 74 has insulating layer 44 electrically insulating two ejecting electrodes by separating at a prescribed space, first ejecting electrode 46 formed on the upper side of insulating layer 44, insulating layer 48 covering first ejecting electrode 46, guard electrode 50 formed on the upper side of insulating layer 48, and insulating layer 52 covering guard electrode 50. In addition, substrate 74 has second ejecting electrode 56 formed on the lower side of insulating layer 44, and insulating layer 58 covering second ejecting electrode 56. Guard electrode 50 is provided to prevent the electric fields of the contiguous ejecting parts from being influenced by the voltage applied to first ejecting electrode 46 and second ejecting electrode 56.

Floating conductive plate 62 is provided in ink jet head 70 in an electrically floating state. Floating conductive plate 62 constitutes the bottom of ink channel 72 and, at the same time, migrates upward (i.e., toward the side of the recording medium) ink particles R (charged particles) in ink channel 72 positively charged by induced voltage steadily generating by the pulse-like ejecting voltage applied to first ejecting electrode 46 and second ejecting electrode 56. Further, electrically insulating covering film 64 is formed on the surface of floating conductive plate 62 to whereby prevent the physical properties and the composition of ink from becoming labile by the application of electric charge to the ink, etc. The electric resistance of the electrical insulating covering film is preferably 10¹²Ω·cm or more, more preferably 10¹³Ω·cm or more. It is preferred that the insulating covering film is anticorrosive to ink, by which floating conductive plate 62 is prevented from being corroded by ink. Floating conductive plate 62 is covered with insulating member 66 from the down side. Floating conductive plate 62 is completely electrically insulated by this constitution.

Floating conductive plate 62 is present one or more per one head unit (for example, in a case where there are four heads of C, M, Y and K, each head has at least one floating conductive plate, and there is no case where C and M head units have a common floating conductive plate).

As shown in Fig. 3, for recording on recording medium P by ejecting ink droplets from ink jet head 70, ink flow Q is generated by circulating the ink in ink channel 72, and prescribed voltage (e.g., +100 V) is applied to guard electrode 50. Further, positive voltage is applied to first ejecting electrode 46, second ejecting electrode 56 and recording medium P (when gap d is 500 µm, to form the potential difference of from 1 to 3.0 kV or so is a standard) so as to form ejecting electric field among first ejecting electrode 46, second ejecting electrode 56 and recording medium P by which positively charged particles R in ink droplets G guided by ink guide part 78 and jetted from opening 75 are attracted to recording medium P.

When pulse voltage is applied to first ejecting electrode 46 and second ejecting electrode 56 in this state according to image signal, ink droplets G heightened in concentration of charged particles are ejected from opening 75 (for example, when the initial charged particle concentration is from 3 to 15%, the charged particle concentration of ink droplets G becomes 30% or more).

At that time, the values of voltage applied to first ejecting electrode 46 and second ejecting electrode 56 are in advance adjusted so that ink droplets G are ejected only when pulse voltages are applied to both first ejecting electrode 46 and second ejecting electrode 56.

Thus when positive pulse voltages are applied, ink droplets G are guided by ink guide part 78 and jetted from opening 75 and adhered to recording medium P, at the same time, positive induced voltage is generated in floating conductive plate 62 by positive voltages applied to first ejecting electrode 46 and second ejecting electrode 56. Even if the voltages applied to first ejecting electrode 46 and second ejecting electrode 56 are pulse voltages, the induced voltage is almost steady voltage. Accordingly, positively charged particles R in ink channel 72 get a force to be migrated upward by the electric field formed among floating conductive plate 62, guard electrode 50 and recording medium P, so that the concentration of charged particles R becomes high in the vicinity of substrate 74. As shown in Fig. 3, when many ejecting parts (that is, channels for ejecting inks) are used, the number of charged particles necessary for ejection increases, but the number of first ejecting electrode 46 and second ejecting electrode 56 used increases, so that the induced voltage induced by floating conductive plate 62 becomes high, as a result the number of charged particles R migrating toward the recording medium also increases.

In the above, the example of positively charged colored particles is described, but colored particles may be negatively charged. In that case, the above charge polarities are all inversed polarities.

In the invention, it is preferred to fix inks by any appropriate heating means after ink ejection to a recording medium. As heating means, a contact type heating apparatus, e.g., a heat roller, a heat block and belt heating, and a non-contact type heating apparatus, e.g., a drier, an infrared lamp, a visible ray lamp, an ultraviolet lamp, and a hot air oven, can be used. These heating apparatus are preferably linking and integrated with an ink jet recording apparatus. The temperature of a recording medium at fixing time is preferably in the range of from 40 to 200°C for easiness of fixation. The fixing time is preferably in the range of from 1 µsec to 20 sec.

### Replenishment of ink composition:

In an ink jet recording system utilizing electrostatic field, the charged particles in an ink composition are ejected in a concentrated state. Accordingly, when the ejection of an ink composition is performed for hours, the charged particles in the ink composition are reduced and the electric conductivity of the ink composition lowers. Further, the proportion of the electric conductivity of the charged particles and the electric conductivity of the ink composition changes. In addition, since charged particles having greater particle sizes are liable to be ejected prior to charged particles having smaller particle sizes, the average diameter of charged particles becomes small. Further, the content of the solid matters in the ink composition changes, so that the coefficient of viscosity also changes.

As a result of the fluctuation of the values of physical properties, ejection failure, the reduction of the optical density of recorded images and bleeding of inks occur. Therefore, by replenishing an ink composition having higher concentration (higher in the solids content concentration) than an ink composition initially charged in an ink tank, the reduction of charged particles can be prevented, and the electric conductivity of the ink composition and the proportion of the electric conductivity of the charged particles and the electric conductivity of the ink composition can be maintained in a constant range. Further, the average particle size and the coefficient of viscosity can also be maintained. Moreover, ink ejection can be performed stably for long hours by maintaining the values of physical properties of an ink composition in constant ranges. It is preferred to perform replenishment at this time mechanically or manually by detecting the values of physical properties such as electric conductivity and optical density of the ink solution in use and computing the ullage. Replenishment may also be performed mechanically or manually by computing the amount of ink composition to be used on the basis of the image data.

### Recording medium:

A variety of recording media can be used in the invention according to purposes. For example, papers, plastic films, metals, papers laminated or deposited with plastics or metals, and plastic films laminated or deposited with metals can be used.

### Examples

The invention will be described with referring to Examples and Comparative Examples, but the invention is not limited thereto.

### Example 1

### Materials used:

The following materials were used in Example 1.
· Cyan pigment (a coloring material): a phthalocyanine pigment, C.I. Pigment Blue (15:3) (LIONOL BLUE FG-7350, manufactured by Toyo Ink Mfg. Co., Ltd.)
·Covering agent (AP-1)
· Dispersant (BZ-2)
· Charge adjustors
   Component (a) in the invention: (CT-1)
   Component (b) in the invention: dimethylaminohexanol
· Dispersion medium, Isopar G (manufactured by Exxon)
   The structures of covering agent (AP-1), dispersant (BZ-2) and charge adjustor
   (CT-1) are shown below.

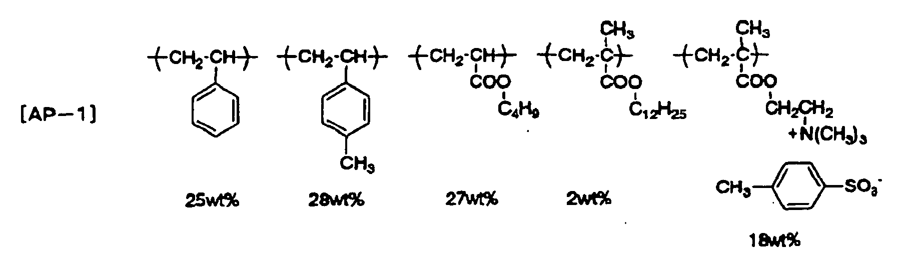

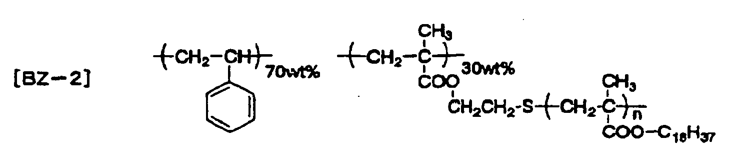

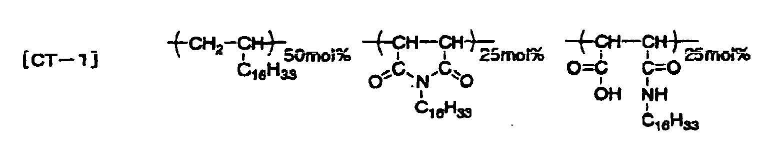

Covering agent (AP-1) was obtained by radical polymerizing styrene, 4-methylstyrene, butyl acrylate, dodecyl methacrylate and 2-(N,N-dimethylamino)ethyl methacrylate with a well-known polymerization initiator, and further reacting with methyl tosylate. The weight average molecular weight of (AP-1) was 15,000, the degree of polydispersion (weight average molecular weight/number average molecular weight) was 2.7, the glass transition point (a mid point) was 51°C, and the softening point by a strain gauge method was 46°C.

Dispersant (BZ-2) was obtained by radical polymerizing stearyl methacrylate in the presence of 2-mercaptoethanol, and further reacting with methacrylic acid anhydride to obtain a stearyl methacrylate polymer having methacryloyl groups at terminals (weight average molecular weight: 7,600), and radical polymerizing the stearyl methacrylate polymer and styrene. The weight average molecular weight of (BZ-2) was 110,000.

Charge adjustor (CT-1) was obtained by reacting a copolymer of 1-octadecene and maleic anhydride with 1-hexadecylamine. The weight average molecular weight of (CT-1) was 17,000.

### Manufacture of ink composition (EC-1):

10 grams of a cyan pigment and 20 g of covering agent (AP-1) were put in a desk type kneader PBV-0.1 (manufactured by Irie Shokai Co.), and mixed with heating for 2 hours after setting the temperature of heater at 100°C. The obtained mixture (30 g) was coarsely pulverized with a Trio-Blender (manufactured by Trio Science Co., Ltd.), and further finely pulverized with an SK-M10 type sample mill (manufactured by Kyoritsu Rikoh Co., Ltd.). The obtained finely pulverized product (30 g) was preliminarily dispersed with 7.5 g of dispersant (BZ-2), 75 g of Isopar G and glass beads having a diameter of about 3.0 mm in a paint shaker (manufactured by Toyo Seiki Seisaku-Sho, Ltd.). After removing the glass beads, the preliminarily dispersed product was dispersed (made particles) with zirconia ceramic beads having a diameter of about 0.6 mm in Type KDL DYNO-MILL (manufactured by Shinmaru Enterprises Corporation) with maintaining the inner temperature at 25°C for 5 hours, subsequently at 45°C for 5 hours, at an engine speed of 2,000 rpm. The zirconia ceramic beads were removed from the obtained dispersion, and 316 g of Isopar G, 1.5 g of charge adjustor (CT-1), and 1.0 g of dimethylaminohexanol were added to the dispersion to obtain ink composition (EC-1).

The volume average particle size of the charged particles in ink composition (EC-1) measured with CAPA-700 (manufactured by Horiba, Ltd.) at an engine speed of 5,000 rpm was 0.9 µm. The electric conductivity of the ink composition at 20°C measured with an LCR meter (AG-4311, manufactured by Ando Electric Co., Ltd.) and electrode for liquid (LP-05 type, manufactured by Kawaguchi Electric Works Co., Ltd.), and conditions of applied voltage of 5 V and frequency of 1 kHz was 124 nS/m. Further, the ink composition was subjected to centrifugal separation with a compact high speed cooling centrifuge (SRX-201, manufactured by TOMY SEIKO Co., Ltd.) at an engine speed of 14,500 rpm at 20°C for 30 minutes to precipitate the charged particles. The electric conductivity of the supernatant measured was 37 nS/m. The electric conductivity of the charged particles was 87 nS/m, which was 70% to the electric conductivity of the ink composition. The charge of the charged particles was positive.

### Ink jet recording:

Ink composition (EC-1) was filled in the ink tank of the ink jet apparatus shown in Figs. 1 to 3. As the ejection head, 150 dpi (three-row zigzag layout of channel density of 50 dpi) of the type as shown in Fig. 2, 833 channel heads, and a silicone rubber heat roller having a built-in type 1 kW heater as the fixing means were used. As the temperature controlling means, an immersion heater and stirring blades were provided in the ink tank, ink temperature was set at 30°C, and the temperature was controlled with a thermostat by rotating the stirring blades at 30 rpm. The stirring blades were also used as a stirring means to prevent precipitation and agglomeration. The ink channel was made partly transparent, an LED luminescent element and a light detecting element were arranged with the ink channel between and, by the output signals, the concentration by putting a dilution solution (Isopar G) and concentrated ink (the solids content was concentrated two times the above ink composition) into the tank was controlled. As a recording medium, art paper for offset printing was used. The dirt on the surface of the recording medium was removed by air pump suction, and then the ejection heads were approached to the image-forming position of the recording medium, the image data to be recorded were transmitted to the arithmetic and control unit of image data, the ink composition was ejected with carrying the recording medium by the rotation of the carrier belt while gradually moving the ejection heads, and an image was formed by imaging resolution of 2,400 dpi. As the carrier belt, a metal belt laminated with a polyimide film was used. Line markers were arranged at one end of the belt along the carrying direction, and the markers were optically read by a detecting means of the position of carrier belt, and by driving a position controlling means, the image was formed. At this time, the distance between the ejection heads and the recording medium was maintained at 0.5 mm by the output of an optical gap-detecting unit. The surface potential of the recording medium was set at ―1.5 kV at ejection, pulse voltage of +200 V (pulse width of 50 µsec) was applied in performing ejection, and the image was formed at driving frequency of 10 kHz.

Immediately after image recording, the image was fixed with a heat roller. The temperature of the art paper at fixing time was 100°C, and the contact time with the heat roller was 1 sec.

The optical density of the solid part of the obtained image-recorded matter measured with X-Rite 508 optical densitometer (manufactured by X-Rite) was 1.57.

### Example 2

An ink composition was prepared in the same manner as in Example 1 except that 0.5 g of hexamethylenediamine was used in place of dimethylaminohexanol of component (b) of the invention.

From the same measurements of the obtained ink composition as in Example 1, the electric conductivity of the obtained ink composition at 20°C was 129 nS/m, the electric conductivity of the supernatant was 30 nS/m, the electric conductivity of the charged particles was 96 nS/m, which was 74% to the electric conductivity of the ink composition. The image density was 1.60.

### Example 3

An ink composition was prepared in the same manner as in Example 1 except that the solution obtained by dissolving 1.5 g of tetrabutylammonium iodide in 5.0 g of 2-propanol was used in place of dimethylaminohexanol of component (b) of the invention.

From the same measurements of the obtained ink composition as in Example 1, the electric conductivity of the obtained ink composition at 20°C was 102 nS/m, the electric conductivity of the supernatant was 39 nS/m, the electric conductivity of the charged particles was 63 nS/m, which was 62% to the electric conductivity of the ink composition. The image density was 1.50.

### Comparative Example 1

An ink composition was prepared in the same manner as in Example 3 except that component (b) of the invention was not used.

From the same measurements of the obtained ink composition as in Example 3, the electric conductivity of the obtained ink composition at 20°C was 120 nS/m, the electric conductivity of the supernatant was 74 nS/m, the electric conductivity of the charged particles was 46 nS/m, which was 38% to the electric conductivity of the ink composition. The image density was 0.67.

### Example 4

An ink composition was prepared in the same manner as in Example 1 except that 3.0 g of zirconium 2-ethylhexanoate was used in place of (CT-1) of component (a) of the invention, and 0.3 g of polyethyleneimine was used in place of dimethylaminohexanol of component (b) of the invention.

From the same measurements of the obtained ink composition as in Example 1, the electric conductivity of the obtained ink composition at 20°C was 143 nS/m, the electric conductivity of the supernatant was 42 nS/m, the electric conductivity of the charged particles was 101 nS/m, which was 71% to the electric conductivity of the ink composition. The image density was 1.57.

### Comparative Example 2

An ink composition was prepared in the same manner as in Example 4 except that component (b) of the invention was not used.

From the same measurements of the obtained ink composition as in Example 4, the electric conductivity of the obtained ink composition at 20°C was 131 nS/m, the electric conductivity of the supernatant was 74 nS/m, the electric conductivity of the charged particles was 57 nS/m, which was 44% to the electric conductivity of the ink composition. The image density was 1.85.

### Example 5

An ink composition was prepared in the same manner as in Example 1 except that 2.5 g of zirconium oxide naphthenate was used in place of (CT-1) of component (a) of the invention, and the solution obtained by dissolving 1.5 g of hexadecyltrimethylammonium bromide in 5.0 g of ethanol was used in place of dimethylaminohexanol of component (b) of the invention.

From the same measurements of the obtained ink composition as in Example 1, the electric conductivity of the obtained ink composition at 20°C was 119 nS/m, the electric conductivity of the supernatant was 44 nS/m, the electric conductivity of the charged particles was 75 nS/m, which was 63% to the electric conductivity of the ink composition. The image density was 1.51.

### Comparative Example 3

An ink composition was prepared in the same manner as in Example 5 except that component (b) of the invention was not used.

From the same measurements of the obtained ink composition as in Example 5, the electric conductivity of the obtained ink composition at 20°C was 122 nS/m, the electric conductivity of the supernatant was 72 nS/m, the electric conductivity of the charged particles was 50 nS/m, which was 40% to the electric conductivity of the ink composition. The image density was 0.79.

While the invention has been described in detail and with reference to specific embodiments thereof, it will be apparent to one skilled in the art that various changes and modifications can be made therein without departing from the spirit and scope thereof.

The present application claims foreign priority based on Japanese Patent Application No. JP2004-265415, filed September 13 of 2004, the contents of which is incorporated herein by reference.

## Claims

1. A liquid ink composition comprising: a dispersion medium; charged particles containing a colorant and a covering agent; an electric charge adjustor; and a dispersant, wherein the electric charge adjustor comprises:
(a) at least one compound of an organic acid and a metal salt thereof; and
(b) at least one compound of an organic amine and an onium salt.

2. The liquid ink composition according to claim 1, wherein the organic acid is an organic compound having an acid radial selected from the group consisting of carboxylic acid, sulfonic acid, sulfuric acid, phosphoric acid, phosphonic acid and boric acid.

3. The liquid ink composition according to claim 1, wherein the metal salt is at least one of a salt of divalent or higher valence metal and a salt of divalent or higher valence metal oxide.

4. The liquid ink composition according to claim 1, wherein the basic compound is an organic amine.

5. The liquid ink composition according to claim 1, wherein the onium salt is at least one of an ammonium salt, a sulfonium salt and a phosphonium salt.

6. The liquid ink composition according to claim 1, wherein the coloring material is a coloring material covered with the covering agent.

7. The liquid ink composition according to claim 1, wherein the charged particles are dispersed in a dispersion medium.

8. An ink jet recording method comprising ejecting an ink droplet containing a liquid ink composition according to claim 1.

## Patentansprüche

1. Flüssige Tintenzusammensetzung, umfassend: ein Dispersionsmedium; geladene Partikel, die ein Färbemittel und ein Bedeckungsmittel enthalten; einen elektrischen Ladungseinsteller; und ein Dispergiermittel, worin der elektrische Ladungseinsteller umfaßt:
(a) zumindest eine Verbindung von einer organischen Säure und einem Metallsalz hiervon; und
(b) zumindest eine Verbindung von einem organischen Amin und einem Oniumsalz.

2. Flüssige Tintenzusammensetzung gemäß Anspruch 1, worin die organische Säure eine organische Verbindung ist, die ein Säureradikal aufweist, das aus der Gruppe ausgewählt ist, die aus Carbonsäure, Sulfonsäure, Schwefelsäure, Phosphorsäure, Phosphonsäure und Borsäure besteht.

3. Flüssige Tintenzusammensetzung gemäß Anspruch 1, worin das Metallsalz zumindest eines von einem Salz eines zwei- oder höherwertigen Metalls und einem Salz eines zwei- oder höherwertigen Metalloxids ist.

4. Flüssige Tintenzusammensetzung gemäß Anspruch 1, worin die basische Verbindung ein organisches Amin ist.

5. Flüssige Tintenzusammensetzung gemäß Anspruch 1, worin das Oniumsalz zumindest eines von einem Ammoniumsalz, einem Sulfoniumsalz und einem Phosphoniumsalz ist.

6. Flüssige Tintenzusammensetzung gemäß Anspruch 1, worin das Färbematerial ein Färbematerial ist, das mit dem Bedeckungsmittel bedeckt ist.

7. Flüssige Tintenzusammensetzung gemäß Anspruch 1, worin die geladenen Partikel in einem Dispersionsmedium dispergiert sind.

8. Tintenstrahl-Aufzeichnungsverfahren, umfassend das Ausstoßen eines Tintentropfens, der eine flüssige Tintenzusammensetzung gemäß Anspruch 1 enthält.

## Revendications

1. Composition d'encre liquide comprenant : un milieu de dispersion ; des particules chargées contenant un colorant et un agent de revêtement ; un ajusteur de charge électrique ; et un dispersant, dans laquelle l'ajusteur de charge électrique comprend :
(a) au moins un composé d'un acide organique et d'un sel métallique de celui-ci ; et
(b) au moins un composé d'une amine organique et d'un sel d'onium.

2. Composition d'encre liquide selon la revendication 1, dans laquelle l'acide organique est un composé organique ayant un radical acide sélectionné dans le groupe constitué par l'acide carboxylique, l'acide sulfonique, l'acide sulfurique, l'acide phosphorique, l'acide phosphonique et l'acide borique.

3. Composition d'encre liquide selon la revendication 1, dans laquelle le sel métallique est au moins l'un parmi un sel de métal divalent ou de valence supérieure et un sel d'oxyde métallique divalent ou de valence supérieure.

4. Composition d'encre liquide selon la revendication 1, dans laquelle le composé basique est une amine organique.

5. Composition d'encre liquide selon la revendication 1, dans laquelle le sel d'onium est au moins l'un parmi un sel d'ammonium, un sel de sulfonium et un sel de phosphonium.

6. Composition d'encre liquide selon la revendication 1, dans laquelle le matériau colorant est un matériau colorant recouvert avec l'agent de revêtement.

7. Composition d'encre liquide selon la revendication 1, dans laquelle les particules chargées sont dispersées dans un milieu de dispersion.

8. Procédé d'enregistrement à jet d'encre comprenant l'éjection d'une gouttelette d'encre contenant une composition d'encre liquide selon la revendication 1.
